# EUROPEAN PATENT APPLICATION

(11) **EP 4 177 884 A1**
(43) Date of publication of application: **10.05.2023**
(21) Application number: 22206073.3
(22) Date of filing: 08.11.2022
(51) Int. Cl.: G10L 21/10, G06T 13/20

(54) **METHOD AND APPARATUS OF PROCESSING IMAGE, METHOD AND APPARATUS OF TRAINING MODEL, ELECTRONIC DEVICE AND MEDIUM**

(30) Priority: 09.11.2021 CN 202111321970
(71) Applicant: Beijing Baidu Netcom Science Technology Co., Ltd., Beijing 100085 (CN)
(72) Inventor: Hu, Tianshu, Beijing, 100085 (CN); He, Shengyi, Beijing, 100085 (CN); Han, Junyu, Beijing, 100085 (CN); Hong, Zhibin, Beijing, 100085 (CN)
(74) Representative: Hoffmann Eitle

(57) **Abstract**

The present disclosure provides a method and apparatus of processing an image, a method and apparatus of training a model, an electronic device and a medium, which relate to a field of artificial intelligence technology, in particular to deep learning, computer vision and other technical fields. The specific solution includes: generating a first face image, a definition difference and an authenticity difference between the first face image and a reference face image are within a set range; adjusting, according to a target voice used to drive the first face image, a facial action information related to pronunciation in the first face image to generate a second face image with a facial tissue position conforming to a pronunciation rule of the target voice; and determining the second face image as a face image driven by the target voice. The embodiments of the present disclosure may improve an effect of face driving.

## Description

### TECHNICAL FIELD

The present disclosure relates to a field of artificial intelligence technology, in particular to deep learning, computer vision and other technical fields.

### BACKGROUND

Face driving refers to driving a human picture through a medium as content reference, so as to generate a human video matching the reference content by using the human picture. In recent years, a popularity of short video track and live track has created an unprecedented prosperity of content creation, and a continuous upgrading of virtual reality technology has brought more possibilities to the content creation. Face driving technology has also become an important supporting technology behind the content creation.

It is generally believed that the more realistic and close a face driving work is to a real scene, the better the effect. How to improve an effect of the face driving work is important for improving face driving technology.

### SUMMARY

The present disclosure provides a method and apparatus of processing an image, method and apparatus of training a model, electronic device and medium.

According to an aspect of the present disclosure, there is provided a method of processing an image, including:
generating a first face image, wherein a definition difference and an authenticity difference between the first face image and a reference face image are within a set range;
adjusting, according to a target voice used to drive the first face image, a facial action information related to pronunciation in the first face image to generate a second face image with a facial tissue position conforming to a pronunciation rule of the target voice; and
determining the second face image as a face image driven by the target voice.

According to another aspect of the present disclosure, there is provided a method of generating a model, including:
inputting a fourth face image into a face encoding model of a face driving model to be trained to obtain a second face image code, wherein the second face image code is a continuous random variable conforming to a preset distribution;
inputting a target voice into a voice processor of the face driving model to be trained to obtain an adjustment vector;
generating a fifth face image according to the adjustment vector and the second face image code by using a face generation model of the face driving model to be trained;
training the voice processor according to a facial action information of the fifth face image and a target audio; and
obtaining a trained face driving model according to the trained voice processor.

According to another aspect of the present disclosure, there is provided an apparatus of processing an image, including:
a first face image generation module, configured to generate a first face image, wherein a definition difference and an authenticity difference between the first face image and a reference face image are within a set range;
a second face image generation module, configured to adjust, according to a target voice used to drive the first face image, a facial action information related to pronunciation in the first face image to generate a second face image with a facial tissue position conforming to a pronunciation rule of the target voice; and
a driving module, configured to determine the second face image as a face image driven by the target voice.

According to another aspect of the present disclosure, there is provided an apparatus of generating a model, including:
a first input module, configured to input a fourth face image into a face encoding model of a face driving model to be trained to obtain a second face image code, wherein the second face image code is a continuous random variable conforming to a preset distribution;
a second input module, configured to input a target voice into a voice processor of the face driving model to be trained to obtain an adjustment vector;
a first output module, configured to generate a fifth face image according to the adjustment vector and the second face image code by using a face generation model of the face driving model to be trained;
a first training module, configured to train the voice processor according to a facial action information of the fifth face image and a target audio; and
a second training module, configured to obtain a trained face driving model according to the trained voice processor.

According to another aspect of the present disclosure, there is provided an electronic device, including
at least one processor; and
a memory in communication with the at least one processor,
wherein the memory stores instructions executable by the at least one processor, and the instructions are executed by the at least one processor to enable the at least one processor to perform the method according to any embodiment of the present disclosure.

According to another aspect of the present disclosure, there is provided a non-transitory computer readable storage medium having stored thereon computer instructions for causing the computer to perform the method according to any embodiment of the present disclosure.

According to another aspect of the present disclosure, there is provided a computer program product, comprising computer program/instructions, characterized in that the computer program/instructions, when executed by a processor, implement the steps of the method according to any embodiment of the present disclosure.

According to the technology of the present disclosure, according to the reference face image, a first face image with the definition and the authenticity being both greater than the set threshold is generated, and then the target voice is used to drive the first face image, so that the mouth shape, facial texture and other information of the obtained second face image are rich enough and truly present a pronunciation effect consistent with the target voice.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows a schematic diagram of a method of processing an image according to an embodiment of the present disclosure;
FIG. 2 shows a schematic diagram of a method of processing an image according to another embodiment of the present disclosure;
FIG. 3 shows a schematic diagram of a method of processing an image according to another embodiment of the present disclosure;
FIG. 4 shows a schematic diagram of a method of processing an image according to another embodiment of the present disclosure;
FIG. 5 shows a schematic diagram of a method of processing an image according to another embodiment of the present disclosure;
FIG. 6 shows a schematic diagram of a method of processing an image according to another embodiment of the present disclosure;
FIG. 7 shows a schematic diagram of a method of processing an image according to another embodiment of the present disclosure;
FIG. 8 shows a schematic diagram of training a model according to an example of the present disclosure;
FIG. 9 shows a schematic diagram of training a model according to another example of the present disclosure;
FIG. 10 shows a schematic diagram of an apparatus of processing an image according to an embodiment of the present disclosure;
FIG. 11 shows a schematic diagram of an apparatus of processing an image according to another embodiment of the present disclosure;
FIG. 12 shows a schematic diagram of an apparatus of processing an image according to another embodiment of the present disclosure;
FIG. 13 shows a schematic diagram of an apparatus of processing an image according to another embodiment of the present disclosure;
FIG. 14 shows a schematic diagram of an apparatus of processing an image according to another embodiment of the present disclosure;
FIG. 15 shows a schematic diagram of an apparatus of processing an image according to another embodiment of the present disclosure;
FIG. 16 shows a schematic diagram of an apparatus of processing an image according to another embodiment of the present disclosure; and
FIG. 17 shows a block diagram of an electronic device used to implement the method of processing an image of embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

Furthermore, in the following detailed description, numerous specific details are set forth in order to provide a better understanding of the present disclosure. Those skilled in the art should understand that the present disclosure may also be implemented without some of these specific details. In some examples, methods, means, elements and circuits that are well known to those skilled in the art are not described in detail, so as not to obscure the subject matter of the present disclosure.

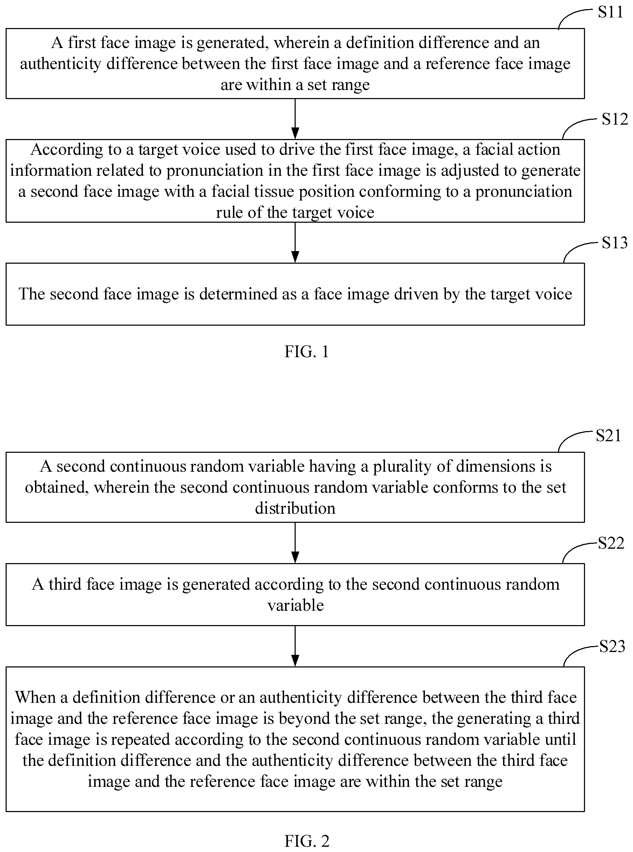

According to embodiments of the present disclosure, there is provided a method of processing an image. FIG. 1 shows a flow diagram of a method of processing an image according to embodiments of the present disclosure. The method may be applied to an apparatus of processing an image. For example, the apparatus may be deployed in a terminal or a server or other processing devices for execution, and may execute a generation of a face image, an adjustment of a face image, a generation of facial action information and the like. The terminal may be user equipment (UE), a mobile device, a cellular phone, a cordless phone, a personal digital assistant (PDA), a handheld device, a computing device, an on-board device, a wearable device, and the like. In some possible implementations, the method may also be implemented by the processor invoking computer readable instructions stored in a memory. As shown in FIG. 1, the method of processing an image includes the following steps.

In step S11, a first face image is generated, and a definition difference and an authenticity difference between the first face image and a reference face image are within a set range.

In step S12, according to a target voice used to drive the first face image, a facial action information related to pronunciation in the first face image is adjusted to generate a second face image with a facial tissue position conforming to a pronunciation rule of the target voice.

In step S13, the second face image is determined as a face image driven by the target voice.

In this embodiment, the first face image may be a face image randomly generated by facial features. The reference face image may be any real and high-definition face image, that is, a real face image with a definition being greater than a set threshold. The reference face image may be a face image with facial features being completely different from the first face image.

A definition difference and an authenticity difference between the first face image and a reference face image are within a set range, that is, the definition difference and the authenticity difference between the first face image and the reference face image are less than a set threshold, thus the first face image is high-definition and real.

For example, if the definition of the first face image is not less than the definition of the reference face image minus a set difference threshold, it may be considered that the definition difference between the first face image and the reference face image is within the set range.

For another example, if the authenticity of the first face image is not less than the authenticity data of the reference face image minus a set difference threshold, it may be considered that the authenticity difference between the first face image and the reference face image is within the set range.

The target voice used to drive the first face image may be used to provide a reference when the first face image changes, so that a mouth shape, a facial muscle, and the like in the changed first face image are consistent with a pronunciation mode of at least one syllable in the target voice.

The target voice may include at least one syllable.

For example, if the target voice is " 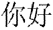 " ("Ni Hao"), the first face image is adjusted according to the target voice, so that the facial action information related to pronunciation in the first face image, that is, positions of each facial tissue, is consistent with the syllable " 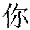 " ("Ni") or " 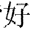 " ("Hao"), so as to obtain the second face image.

In this embodiment, a position of facial tissue conforms to a pronunciation rule of the target voice, which may be that positions of all facial tissues in the face image conform to the pronunciation rule of the target voice, or that positions of a part of facial tissues in the face image conform to the pronunciation rule of the target voice.

The second face image may be at least one image.

In this embodiment, according to the reference face image, a first face image with the definition and the authenticity being both greater than the set threshold is generated, and then the target voice is used to drive the first face image, so that the mouth shape, facial texture and other information of the obtained second face image are rich enough and truly present a pronunciation effect consistent with the target voice.

In an embodiment, the generating a first face image includes:
obtaining a first continuous random variable having a plurality of dimensions, wherein the first continuous random variable conforms to a set distribution, and a universal set of continuous random variables conforming to the set distribution corresponds to a universal set of facial features of a real face; and
generating the first face image according to the first continuous random variable and a preset correspondence relationship between random variables and face images.

In this embodiment, the plurality of dimensions may be a plurality of independent coordinate numbers, and the number of each dimension may represent a kind of face information, for example, n1 dimensions of the plurality of dimensions correspond to eye information, n2 dimensions of the plurality of dimensions correspond to face shape information, and so on.

The set distribution may be a certain continuous mathematical distribution, such as normal distribution, uniform distribution, exponential distribution, and the like. The set distribution may be a standard mathematical distribution or a deformed mathematical distribution.

In the universal set of continuous random variables conforming to the set distribution, each continuous random variable corresponds to a unique real face feature, namely, corresponding to an image of unique real face. There are infinite continuous random variables in the universal set of continuous random variables, which correspond to a universal set of features such as possible facial features and skin color of the face.

The first face image is generated according to the first continuous random variable and a preset correspondence relationship between random variables and face images, which may be that the first face image may be generated by determining a face feature corresponding to the first continuous random variable according to a correspondence relationship between the universal set of random variables conforming to the set distribution and the universal set of face images.

In this embodiment, the first face image is generated according to the first continuous random variable conforming to the set distribution, so that the realistic face features may be quickly obtained, and the generated face has randomness.

In an embodiment, as shown in FIG. 2, a generation process of the preset correspondence relationship between the random variables and the face images includes the following steps.

In step S21, a second continuous random variable having a plurality of dimensions is obtained, wherein the second continuous random variable conforms to the set distribution.

In step S22, a third face image is generated according to the second continuous random variable.

In step S23, when a definition difference or an authenticity difference between the third face image and the reference face image is beyond the set range, the generating a third face image is repeated according to the second continuous random variable until the definition difference and the authenticity difference between the third face image and the reference face image are within the set range.

In this embodiment, the third face image is generated according to the second continuous random variable, which may be that a face image with a random appearance is generated according to a default relationship between data of each dimension in the continuous random variable and features in the face image. The relationship between the features in the face image and data of each dimension in the continuous random variable may be expressed by a formula.

When repeating the generating a third face image according to the second continuous random variable, a correspondence of the relationship between the continuous random variable and the features in the face image may be adjusted. For example, a formula of obtaining features based on the continuous random variable or a parameter of the formula may be adjusted.

The continuous random variable conforms to the set distribution, which may be that data of all dimensions of the continuous random variable may be fitted to the set distribution.

In this embodiment, when determining a correspondence relationship between data of each dimension in the continuous random variable and the features in the face image, with the authenticity and the definition as the standard, a correspondence between data of each dimension in the continuous random variable and the features in the face image is adjusted when the authenticity or definition conditions are not met, so that finally, a high-definition and real face may be obtained through a determined relationship between the features and data.

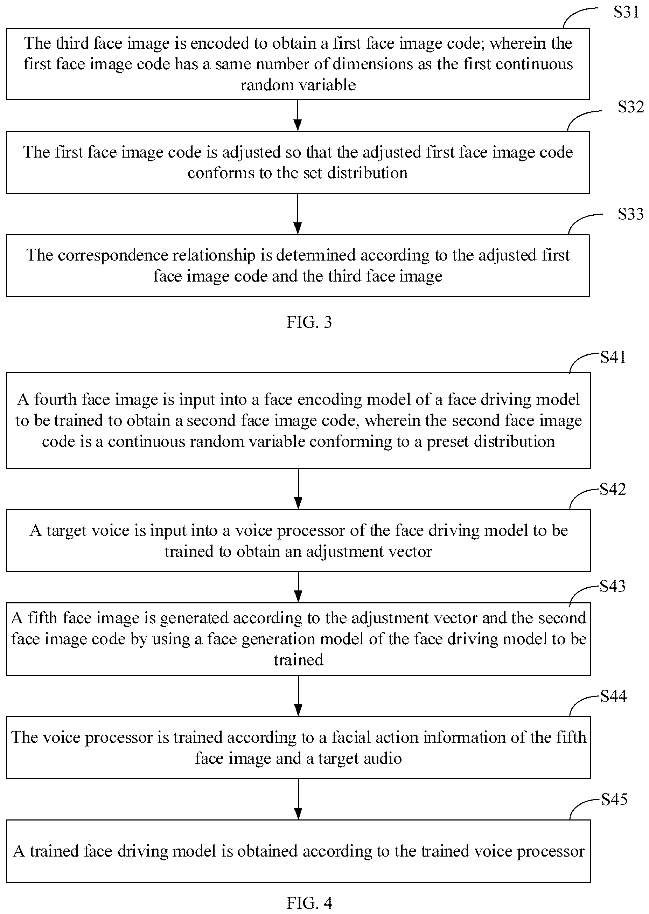

In an embodiment, as shown in FIG. 3, generating the correspondence relationship according to the third face image and the reference face image includes the following steps.

In step S31, the third face image is encoded to obtain a first face image code; and the first face image code has a same number of dimensions as the first continuous random variable.

In step S32, the first face image code is adjusted so that the adjusted first face image code conforms to the set distribution.

In step S33, the correspondence relationship is determined according to the adjusted first face image code and the third face image.

In this embodiment, the third face image may be encoded using any available image encoding method to obtain data with a same distribution and a same number of dimensions as the first continuous random variable.

According to the adjusted first face image code and the third face image, the correspondence relationship is determined, which may be that the correspondence relationship between the adjusted first face image code and the third face image is established, so that a subsequent generation of a face image that is close to the definition and authenticity of the third face image may be achieved based on similar code (i.e. the aforementioned random variable) according to the correspondence relationship.

In this embodiment, after determining a correspondence relationship between the continuous random variable and the face image, the real face image is further encoded, and the relationship between the face image and the continuous random variable is inversely determined, so as to further ensure that the real and high-definition face image may be generated according to the randomly generated continuous variable.

In an embodiment, the adjusting, according to a target voice used to drive the first face image, a facial action information related to pronunciation in the first face image to generate a second face image with a facial tissue position conforming to a pronunciation rule of the target voice includes:
generating an adjustment vector according to the target voice, wherein the adjustment vector corresponds to at least one dimension of the first continuous random variable, and the at least one dimension corresponds to the facial action information; and
adjusting the first continuous random variable according to the adjustment vector so that the first continuous random variable is offset in a direction of the adjustment vector.

In this embodiment, the number of dimensions of the adjustment vector may be less than that of the continuous random variable, and corresponds to the number of dimensions of the facial action information in the continuous random variable. For example, the adjustment vector may include multi-dimensional data used to represent an opening and closing degree of a mouth, a mouth shape, a texture of a first facial muscle, a texture of a second facial muscle, and the like. Data of each dimension corresponds to position information of a facial tissue.

In one possible embodiment, the dimension of the adjustment vector may be determined according to a predetermined displacement accuracy of facial tissue. For example, in a case of low requirements for the displacement accuracy of facial tissue motion, one-dimensional data may be used to express the mouth shape, and in a case of high requirements for the displacement accuracy of facial tissue motion, multi-dimensional data may be used to express the mouth shape.

Adjusting the first continuous random variable according to the adjustment vector so that the first continuous random variable is offset in a direction of the adjustment vector may be that the data of the dimension corresponding to the adjustment vector in the first continuous random variable is as close as possible to the adjustment vector. While the first continuous random variable is adjusted, the adjusted continuous random variable may be defined to still conform to the set distribution.

In this embodiment, through the adjustment vector, the facial action information may be changed so that the face image may present facial action, expression, pronunciation and other information consistent with the target voice.

In an embodiment, the adjustment vector conforms to a preset distribution.

The adjustment vector conforms to the preset distribution, which may mean that the multi-dimensional data of the adjustment vector may be fitted to the preset distribution, or a dimension completion may be performed for the adjustment vector so that the number of the dimensions of the adjustment vector is the same as that of the first continuous random variable, and the adjustment vector conforms to the preset distribution.

In this embodiment, the adjustment vector conforms to the preset distribution, which may ensure that the facial image adjusted according to a pronunciation requirement of the target voice may still meet the high-definition and real requirements.

Embodiments of the present disclosure further provide a method of generating a model, as shown in FIG. 4, including the following steps.

In step S41, a fourth face image is input into a face encoding model of a face driving model to be trained to obtain a second face image code, and the second face image code is a continuous random variable conforming to a preset distribution.

In step S42, a target voice is input into a voice processor of the face driving model to be trained to obtain an adjustment vector.

In step S43, a fifth face image is generated according to the adjustment vector and the second face image code by using a face generation model of the face driving model to be trained.

In step S44, the voice processor is trained according to a facial action information of the fifth face image and a target audio.

In step S45, a trained face driving model is obtained according to the trained voice processor.

In this embodiment, the voice processor may be trained independently, or the voice processor may be integrated with the face encoding model and the face generation model for training.

The voice processor is trained according to a facial action information of the fifth face image and the target audio, which may be that the voice processor is trained or optimized according to a degree of conformity between the facial action information and the target audio, so that the code generated by the audio processor may enable the face generator (face generation model) to generate a real and high-definition face image conforming to the pronunciation rule of the target audio.

The trained face driving model is obtained according to the trained voice processor, which may be that the voice processor, the face generation model and the face encoding model are combined to obtain the face driving model.

In recent years, many trendy content creators have tried to combine some cutting-edge technologies to bring more surprises to everyone, such as using a voice to drive Mona Lisa to sing; or creating a virtual cartoon image to interact with the audience by driving the cartoon image during live broadcast. Behind these creations, the face driving technology is involved. In a process of driving face by voice, a speech content C in a form of a voice file and a picture of a person may be provided, and in an ideal state, a video may be obtained through the face driving technology. The content of the video is that the person in the picture is saying content C, and the mouth shape of the person at each moment in the video may correctly match the voice at the same moment in content C. For the driving face by voice, high-quality modeling of the person is very complicated. On the one hand, because the quality of most video data is often uneven, and the faces in many data are very fuzzy, it is difficult to learn how to model high-quality faces during model training. On the other hand, in a process of voice driving, the mouth is always moving, which makes it difficult to stably model the mouth, including the mouth, teeth and other facial tissues. As a result, the generated result is often very fuzzy, or even unreal.

With the method of generating a model provided in embodiments of the present disclosure, when training the face driving model, an audio encoder may be trained separately from the face encoding model, the face generation model, and the like, so that the audio encoding model may more accurately learn the position information of the facial tissue of the face when pronouncing, and better master the motion state of the moving mouth or other tissues, muscles, and the like, and achieve a better face driving effect. Meanwhile, the face generation model may be a trained face generation model provided by any embodiment of the present disclosure, which may provide randomly generated high-definition and real face images, so that when training how to generate voice driving information, the model may learn sufficiently clear and true face information.

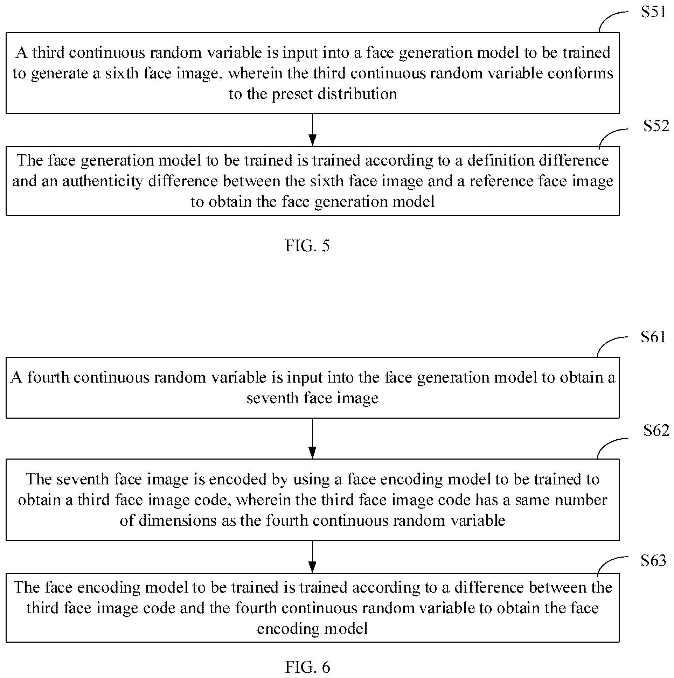

Embodiments of the present disclosure further provide a method of generating a model, as shown in FIG. 5, including the following steps.

In step S51, a third continuous random variable is input into a face generation model to be trained to generate a sixth face image, and the third continuous random variable conforms to the preset distribution.

In step S52, the face generation model to be trained is trained according to a definition difference and an authenticity difference between the sixth face image and a reference face image to obtain the face generation model.

In this embodiment, the reference face image may be a face image different from the sixth face image in facial features.

The face generation model to be trained is trained according to a definition difference and an authenticity difference between the sixth face image and a reference face image, which may be that a parameter or a structure of the face generation model to be trained may be adjusted according to a definition difference and an authenticity difference between the sixth face image and a reference face image until the definition difference and the authenticity difference between the sixth face image and the reference face image are within the set range.

In this embodiment, through a training of the face generation model to be trained, the face generation model may generate a face image with high definition and authenticity, so that in a process of driving a face, the generated face driving image may provide sufficient and real information about the mouth, face muscles, and the like, which is conducive to generating a real, high-definition face driving image.

In an embodiment, the face driving model may be further trained on the basis of the trained face generation model.

Embodiments of the present disclosure further provide a method of generating a model, as shown in FIG. 6, including the following steps.

In step S61, a fourth continuous random variable is input into the face generation model to obtain a seventh face image.

In step S62, the seventh face image is encoded by using a face encoding model to be trained to obtain a third face image code, and the third face image code has a same number of dimensions as the fourth continuous random variable.

In step S63, the face encoding model to be trained is trained according to a difference between the third face image code and the fourth continuous random variable to obtain the face encoding model.

In this embodiment, the face generation model may be a face generation model to be trained or a face generation model obtained after training.

In this embodiment, through a training of the face encoder to be trained, the encoding model obtained after training may perform a reverse operation of the face generation model, that is, according to the face image, the code (or continuous random variable) that conforms to the set distribution and has a same number of dimensions as an original vector of the obtained face image may be obtained. The face encoder may correspond to the face encoding model in other embodiments.

In an embodiment, the face generation model used in a process of training the encoding model is trained by the model generation method provided in any embodiment of the present disclosure.

In this embodiment, the encoding model and face generation model are trained separately, which is conducive to learning stable face generation function and face image encoding function.

In this embodiment, the face generation model and face encoding model may be trained separately from a driving part of the model, which is helpful for the model to learn an accurate information of the facial tissue moving with the voice.

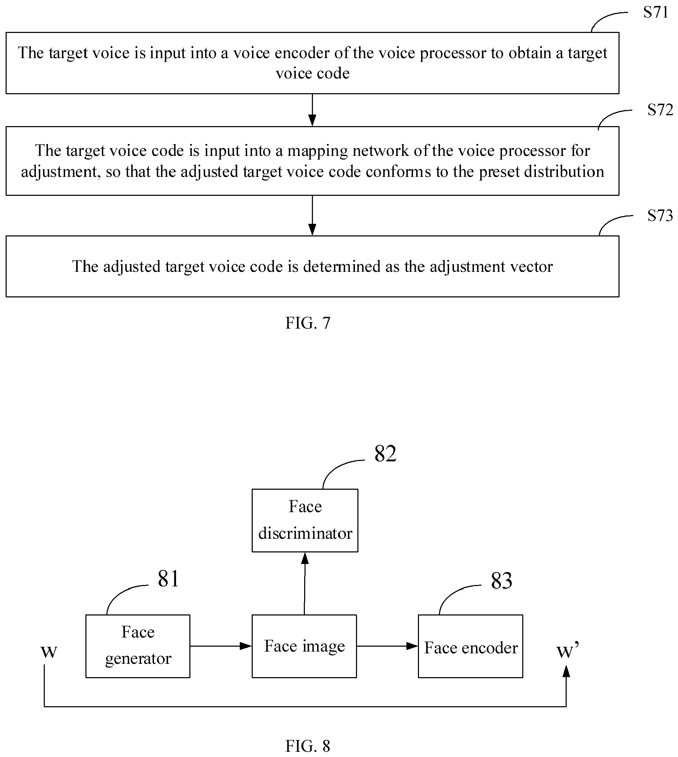

In an embodiment, as shown in FIG. 7, the inputting a target voice into a voice processor of the face driving model to be trained to obtain an adjustment vector includes the following steps.

In step S71, the target voice is input into a voice encoder of the voice processor to obtain a target voice code.

In step S72, the target voice code is input into a mapping network of the voice processor for adjustment, so that the adjusted target voice code conforms to the preset distribution.

In step S73, the adjusted target voice code is determined as the adjustment vector.

In one possible implementation, the mapping network may be a fixed structure, or may perform parameter optimization during a training of the voice encoder.

In this embodiment, the target voice code is input into the mapping network of the speech processor for adjustment, so that the adjusted target voice code conforms to the preset distribution, and the adjusted target voice code may be converted into real and high-definition facial image information by the face generator.

In one example of the present disclosure, a training process of the face driving model may be divided into two parts, a training of the high-definition face priori model and a training of the face driving model based on priori information.

By training the high-definition face priori model (that is, the face generation model mentioned in the preceding embodiments), a face generation model that may generate a real and high-definition face is obtained. Through big data research on face, a distribution of face features in the world is found to conform to a feature of normal distribution or Gaussian distribution. In this example, as shown in FIG. 8, a latent code w is obtained by random sampling from a Gaussian distribution, and a dimension of the latent code w may be 1 × 512. On this basis, a face picture with random face features may be generated by a face generator 81. The face generator 81 may be a face generation model in other embodiments.

In this example, still referring to FIG. 8, the face generator 81 may be supervised in advance through high-definition face data and a face discriminator 82, that is, a real face image and an image generated by the face generator 81 to be trained are used for comparison, and a comparison result is generated in a way of binary classification. According to the comparison result, confrontation training is performed on the face generator 81 to be trained, and finally the result generated by the trained face generator 81 is high-definition and real.

In this example, still referring to FIG. 8, based on the face generator 81, a face encoder 83 capable of compressing a face picture into a latent code may also be trained. The face encoder 83 may be used to perform a reverse operation of the face generator and convert the picture into the latent code. The face encoder 83 may be a face encoding model in other embodiments.

In one specific possible implementation of this example, still referring to FIG. 8, the face encoder 83 may be trained simultaneously with the face generator 81. After the face generator 81 generates the face image, the face encoder 83 may recode the image to obtain the facial features such as features of an eye, a mouth shape, a muscle and the like, and obtain the latent code w'. Then, the code w obtained from an original sampling may be used to supervise the w', so that the w' and the w may share a same distribution, or may be kept as consistent as possible during supervision. Thus, according to the code w' generated by the face encoder 83, the face generator 81 may reconstruct a face.

On the basis of the example in FIG. 8, the face encoder capable of compressing the face picture into the latent code and the generator capable of generating high-definition face through the latent code may be obtained. The two trained models may then be used to train the face driving model.

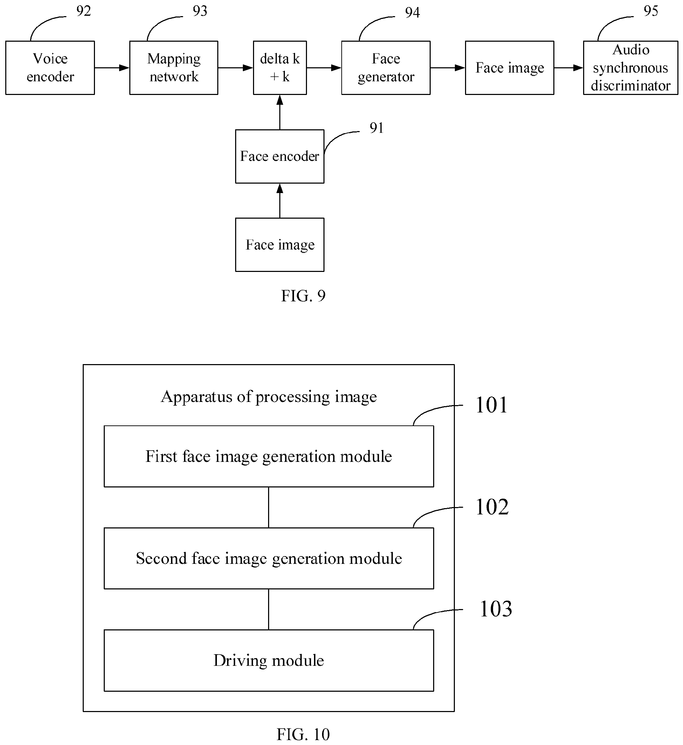

When training a face model based on voice driving, the trained face generator and face encoder may be used as priori models to provide the priori information of high-definition face. As shown in FIG. 9, a face may be encoded into a latent vector k by a face encoder 91. The voice content (corresponding to the target voice in the preceding embodiments) used to drive the face image is encoded by a voice encoder 92, and the encoding result of the voice content is mapped to deltak through a mapping network 93.

In a specific possible implementation, still referring to FIG. 9, the delta k mapped by the encoding result of the voice content has a same number of dimensions as the vector input by the face generator 94 and the vector output by the encoder.

For example, still referring to FIG. 9, when generating a face, 1 × 512 dimensional vector (corresponding to the continuous random variable in the preceding embodiments) is input into the face generator 94 to obtain the face image, and the face image is encoded and converted to 1 × 512 dimensional vector through the face encoder 91. Then, the voice encoder 92 performs encoding according to the voice content, and the delta k obtained through the mapping network 93 may also be 1 × 512 dimensional vector, the number of dimensions of the facial tissue related to pronunciation may be related to the voice content, and the number of other dimensions may be 0.

The deltak in this example may be seen as a condition vector, which is used to modify the original k, so that k shifts to a direction of a condition corresponding to the condition vector. More specifically, the voice encoder in this example uses voice information as a condition to generate an adjustment vector, the adjustment vector is used to modify the information (such as lip shape) of the face picture, so that the finally generated face image may match the voice content. Finally, a result of deltak + k will be sent to the trained face generator 94 to generate a new face picture.

In a process of training with the voice content, parameters of the face encoder 91 and the face generator 94 may be fixed. A loss value is only calculated by an audio synchronous discriminator 95 based on the original face image generated by the face generator 94 and the face image generated after the driving of the voice content, and the voice encoder 92 and the mapping network 93 shown in FIG. 9 are trained.

Since the face generator is a pre trained high-definition model, based on the previously learned priori knowledge, as long as the latent code input in the face generator conforms to a data distribution of k, the generated face may be ensured to be high-definition and real. Since the result obtained through the voice encoder does not share a data space distribution with k in the high probability, which may lead to a fact that the voice code may not be meaningfully integrated with k, this example uses a mapping network to map the encoding of the voice content generated by the voice encoder, and remap the encoding of the voice content into the distribution space of k, which makes delta k+k meaningful, and may generate a real and high-definition facial action picture.

In this example, by training the face generator, the face encoder, the voice encoder, the mapping network, and the like respectively, high-definition face video generation driven by voice may be achieved. In a training process of the face generator, only the face generator needs to learn how to generate the high-definition face, provide a priori knowledge for the face driving model, so as to reduce a difficulty of modeling the high-definition face by the face driving model. On this basis, by taking the voice content as a condition, the code of the voice content is remapped to the data space distribution subject to the input of the face encoder, and combined with the face latent code, so as to change face information and achieve a driving effect.

Embodiments of the present disclosure further provide an apparatus of processing an image, as shown in FIG. 10, including:
a first face image generation module 101, used to generate a first face image, wherein a definition difference and an authenticity difference between the first face image and a reference face image are within a set range;
a second face image generation module 102, used to adjust, according to a target voice used to drive the first face image, a facial action information related to pronunciation in the first face image to generate a second face image with a facial tissue position conforming to a pronunciation rule of the target voice; and
a driving module 103, used to determine the second face image as a face image driven by the target voice.

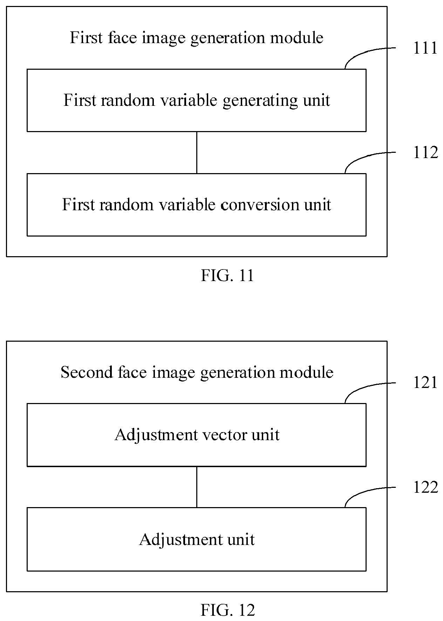

In an embodiment, as shown in FIG. 11, the first face image generation module includes:
a first random variable generating unit 111, used to obtain a first continuous random variable having a plurality of dimensions, wherein the first continuous random variable conforms to a set distribution, and a universal set of continuous random variables conforming to the set distribution corresponds to a universal set of facial features of a real face; and
a first random variable conversion unit 112, used to generate the first face image according to the first continuous random variable and a preset correspondence relationship between random variables and face images.

In an embodiment, a generation process of the preset correspondence relationship between the random variables and the face images includes:
obtaining a second continuous random variable having a plurality of dimensions, wherein the second continuous random variable conforms to the set distribution;
generating a third face image according to the second continuous random variable; and
when a definition difference or an authenticity difference between the third face image and the reference face image is beyond the set range, repeating the generating a third face image according to the second continuous random variable until the definition difference and the authenticity difference between the third face image and the reference face image are within the set range.

In an embodiment, generating the correspondence relationship according to the third face image and the reference face image includes:
encoding the third face image to obtain a first face image code; wherein the first face image code has a same number of dimensions as the first continuous random variable;
adjusting the first face image code so that the adjusted first face image code conforms to the set distribution; and
determining the correspondence relationship according to the adjusted first face image code and the third face image.

In an embodiment, as shown in FIG. 12, the second face image generation module includes:
an adjustment vector unit 121, used to generate an adjustment vector according to the target voice, wherein the adjustment vector corresponds to at least one dimension of the first continuous random variable, and the at least one dimension corresponds to the facial action information; and
an adjustment unit 122, used to adjust the first continuous random variable according to the adjustment vector so that the first continuous random variable is offset in a direction of the adjustment vector.

In an embodiment, the adjustment vector conforms to a preset distribution.

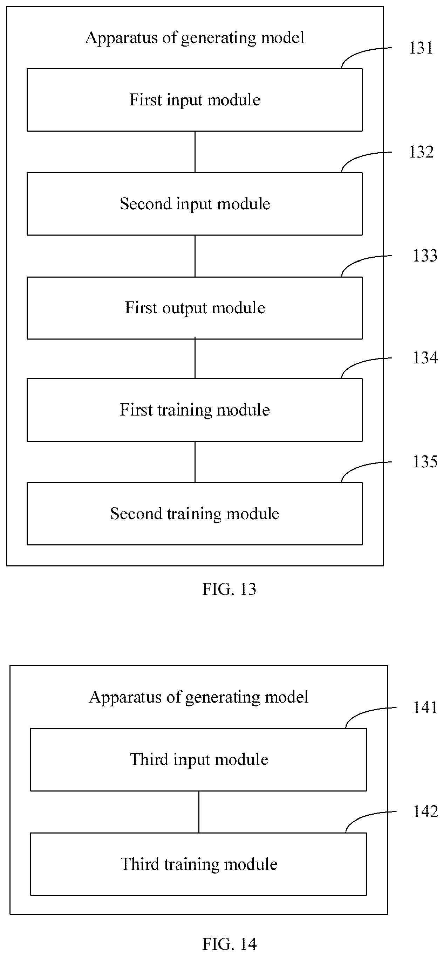

Embodiments of the present disclosure further provide an apparatus of generating a model, as shown in FIG. 13, including:
a first input module 131, used to input a fourth face image into a face encoding model of a face driving model to be trained to obtain a second face image code, wherein the second face image code is a continuous random variable conforming to a preset distribution;
a second input module 132, used to input a target voice into a voice processor of the face driving model to be trained to obtain an adjustment vector;
a first output module 133, used to generate a fifth face image according to the adjustment vector and the second face image code by using a face generation model of the face driving model to be trained;
a first training module 134, used to train the voice processor according to a facial action information of the fifth face image and a target audio; and
a second training module 135, used to obtain a trained face driving model according to the trained voice processor.

In an embodiment, as shown in FIG. 14, an apparatus of generating a model further includes:
a third input module 141, used to input a third continuous random variable into a face generation model to be trained to generate a sixth face image, wherein the third continuous random variable conforms to the preset distribution; and
a third training module 142, used to train the face generation model to be trained according to a definition difference and an authenticity difference between the sixth face image and a reference face image to obtain the face generation model.

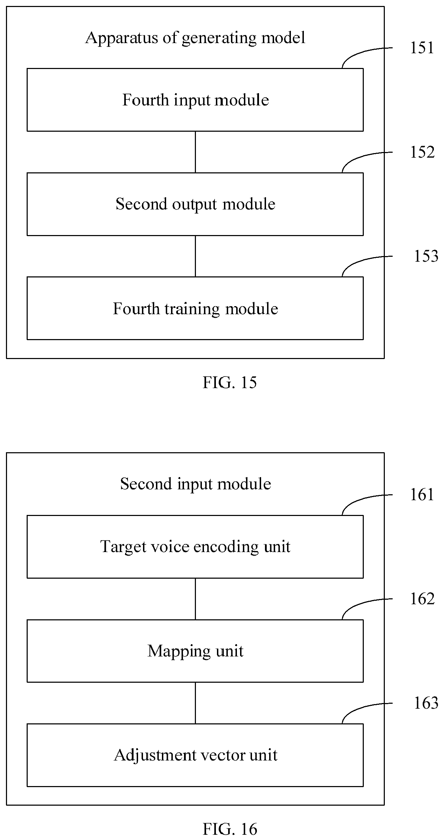

In an embodiment, as shown in FIG. 15, an apparatus of generating a model further includes:
a fourth input module 151, used to input a fourth continuous random variable into the face generation model to obtain a seventh face image;
a second output module 152, used to encode the seventh face image by using a face encoding model to be trained to obtain a third face image code, wherein the third face image code has a same number of dimensions as the fourth continuous random variable; and
a fourth training module 153, used to train the face encoding model to be trained according to a difference between the third face image code and the fourth continuous random variable to obtain the face encoding model.

In an embodiment, as shown in FIG. 16, the second input module includes:
a target voice encoding unit 161, used to input the target voice into a voice encoder of the voice processor to obtain a target voice code;
a mapping unit 162, used to input the target voice code into a mapping network of the voice processor for adjustment, so that the adjusted target voice code conforms to the preset distribution; and
an adjustment vector unit 163, used to determine the adjusted target voice code as the adjustment vector.

In the technical solution of the present disclosure, an acquisition, a storage, and an application of user personal information involved comply with provisions of relevant laws and regulations, and do not violate public order and good custom.

According to embodiments of the present disclosure, the present disclosure further provides an electronic device, a readable storage medium and a computer program product.

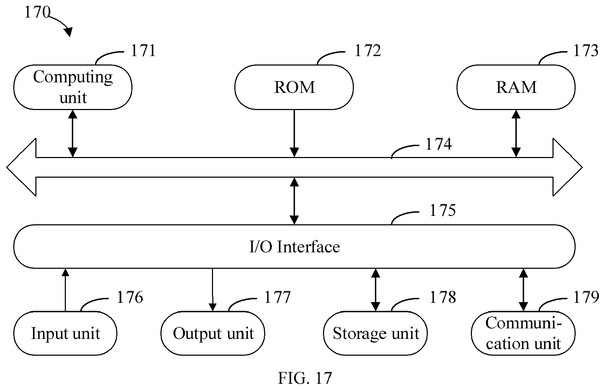

FIG. 17 shows a schematic block diagram of an exemplary electronic device 170 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 17, the device 170 includes a computing unit 171 which may perform various appropriate actions and processes according to a computer program stored in a read only memory (ROM) 172 or a computer program loaded from a storage unit 178 into a random access memory (RAM) 173. In the RAM 173, various programs and data necessary for an operation of the device 170 may also be stored. The computing unit 171, the ROM 172 and the RAM 173 are connected to each other through a bus 174. An input/output (I/O) interface 175 is also connected to the bus 174.

A plurality of components in the device 170 are connected to the I/O interface 175, including: an input unit 176, such as a keyboard, or a mouse; an output unit 177, such as displays or speakers of various types; a storage unit 178, such as a disk, or an optical disc; and a communication unit 179, such as a network card, a modem, or a wireless communication transceiver. The communication unit 179 allows the device 170 to exchange information/data with other devices through a computer network such as Internet and/or various telecommunication networks.

The computing unit 171 may be various general-purpose and/or dedicated processing assemblies having processing and computing capabilities. Some examples of the computing units 171 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 171 executes various methods and processes described above, such as the method of processing an image. For example, in some embodiments, the method of processing an image may be implemented as a computer software program which is tangibly embodied in a machine-readable medium, such as the storage unit 178. In some embodiments, the computer program may be partially or entirely loaded and/or installed in the device 170 via the ROM 172 and/or the communication unit 173. The computer program, when loaded in the RAM 173 and executed by the computing unit 171, may execute one or more steps in the method of processing an image described above. Alternatively, in other embodiments, the computing unit 171 may be used to perform the method of processing an image by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of processing an image, comprising:
generating (S11) a first face image, wherein a definition difference and an authenticity difference between the first face image and a reference face image are within a set range;
adjusting (S12), according to a target voice used to drive the first face image, a facial action information related to pronunciation in the first face image to generate a second face image with a facial tissue position conforming to a pronunciation rule of the target voice; and
determining (S13) the second face image as a face image driven by the target voice.

2. The method according to claim 1, wherein the generating (S11) a first face image comprises:
obtaining a first continuous random variable having a plurality of dimensions, wherein the first continuous random variable conforms to a set distribution, and a universal set of continuous random variables conforming to the set distribution corresponds to a universal set of facial features of a real face; and
generating the first face image according to the first continuous random variable and a preset correspondence relationship between random variables and face images.

3. The method according to claim 2, wherein a generation process of the preset correspondence relationship between the random variables and the face images comprises:
obtaining (S21) a second continuous random variable having a plurality of dimensions, wherein the second continuous random variable conforms to the set distribution;
generating (S22) a third face image according to the second continuous random variable; and
when a definition difference or an authenticity difference between the third face image and the reference face image is beyond the set range, repeating (S23) the generating a third face image according to the second continuous random variable until the definition difference and the authenticity difference between the third face image and the reference face image are within the set range.

4. The method according to claim 3, wherein generating the correspondence relationship according to the third face image and the reference face image, comprises:
encoding (S31) the third face image to obtain a first face image code; wherein the first face image code has a same number of dimensions as the first continuous random variable;
adjusting (S32) the first face image code so that the adjusted first face image code conforms to the set distribution; and
determining (S33) the correspondence relationship according to the adjusted first face image code and the third face image.

5. The method according to any one of claims 2 to 4, wherein the adjusting (S12), according to a target voice used to drive the first face image, a facial action information related to pronunciation in the first face image to generate a second face image with a facial tissue position conforming to a pronunciation rule of the target voice, comprises:
generating an adjustment vector according to the target voice, wherein the adjustment vector corresponds to at least one dimension of the first continuous random variable, and the at least one dimension corresponds to the facial action information; and
adjusting the first continuous random variable according to the adjustment vector so that the first continuous random variable is offset in a direction of the adjustment vector.

6. The method according to claim 5, wherein the adjustment vector conforms to a preset distribution.

7. A method of generating a model, comprising:
inputting (S41) a fourth face image into a face encoding model of a face driving model to be trained to obtain a second face image code, wherein the second face image code is a continuous random variable conforming to a preset distribution;
inputting (S42) a target voice into a voice processor of the face driving model to be trained to obtain an adjustment vector;
generating (S43) a fifth face image according to the adjustment vector and the second face image code by using a face generation model of the face driving model to be trained;
training (S44) the voice processor according to a facial action information of the fifth face image and a target audio; and
obtaining (S45) a trained face driving model according to the trained voice processor.

8. The method according to claim 7, further comprising:
inputting (S51) a third continuous random variable into a face generation model to be trained to generate a sixth face image, wherein the third continuous random variable conforms to the preset distribution; and
training (S52) the face generation model to be trained according to a definition difference and an authenticity difference between the sixth face image and a reference face image to obtain the face generation model.

9. The method according to claim 7 or 8, further comprising::
inputting (S61) a fourth continuous random variable into the face generation model to obtain a seventh face image;
encoding (S62) the seventh face image by using a face encoding model to be trained to obtain a third face image code, wherein the third face image code has a same number of dimensions as the fourth continuous random variable; and
training (S63) the face encoding model to be trained according to a difference between the third face image code and the fourth continuous random variable to obtain the face encoding model.

10. The method according to any one of claims 7 to 9, wherein the inputting a target voice into a voice processor of the face driving model to be trained to obtain an adjustment vector, comprises:
inputting (S71) the target voice into a voice encoder (92) of the voice processor to obtain a target voice code;
inputting (S72) the target voice code into a mapping network (93) of the voice processor for adjustment, so that the adjusted target voice code conforms to the preset distribution; and
determining (S73) the adjusted target voice code as the adjustment vector.

11. An apparatus of processing an image, comprising:
a first face image generation module (101), configured to generate a first face image, wherein a definition difference and an authenticity difference between the first face image and a reference face image are within a set range;
a second face image generation module (102), configured to adjust, according to a target voice used to drive the first face image, a facial action information related to pronunciation in the first face image to generate a second face image with a facial tissue position conforming to a pronunciation rule of the target voice; and
a driving module (103), configured to determine the second face image as a face image driven by the target voice.

12. An apparatus of generating a model, comprising:
a first input module (131), configured to input a fourth face image into a face encoding model of a face driving model to be trained to obtain a second face image code, wherein the second face image code is a continuous random variable conforming to a preset distribution;
a second input module (132), configured to input a target voice into a voice processor of the face driving model to be trained to obtain an adjustment vector;
a first output module (133), configured to generate a fifth face image according to the adjustment vector and the second face image code by using a face generation model of the face driving model to be trained;
a first training module (134), configured to train the voice processor according to a facial action information of the fifth face image and a target audio; and
a second training module (135), configured to obtain a trained face driving model according to the trained voice processor.

13. An electronic device (170), comprising:
at least one processor; and
a memory in communication with the at least one processor,
wherein the memory stores instructions executable by the at least one processor, and the instructions are executed by the at least one processor to enable the at least one processor to perform the method according to any one of claims 1 to 10.

14. A non-transitory computer readable storage medium having stored thereon computer instructions for causing the computer to perform the method according to any one of claims 1 to 10.

15. A computer program product, comprising computer program/instructions, **characterized in that** the computer program/instructions, when executed by a processor, implement the steps of the method according to any one of claims 1 to 10.
